Europäisches Patentamt

European Patent Office

Office européen des brevets

(19)

(11) Veröffentlichungsnummer: **0 078 915**
**B1**

## EUROPÄISCHE PATENTSCHRIFT

(12)

(45) Veröffentlichungstag der Patentschrift:
**18.05.88**

(21) Anmeldenummer: **82109175.8**

(22) Anmeldetag: **05.10.82**

(51) Int. Cl.⁴: **F 03 D 1/06,** B 23 C 3/18

(54) Verwundenes Profil-Bauteil und Vorrichtung zur Bearbeitung von Polygonzug-Flächen.

(30) Priorität: **05.11.81 DE 3143846**

(43) Veröffentlichungstag der Anmeldung:
**18.05.83 Patentblatt 83/20**

(45) Bekanntmachung des Hinweises auf die Patenterteilung:
**18.05.88 Patentblatt 88/20**

(84) Benannte Vertragsstaaten:
**FR GB NL SE**

(56) Entgegenhaltungen:
DE-A-2 800 525
GB-A-578 485

**WERKSTATT UND BETRIEB, Band 114, Nr. 9,
September 1981, Seiten 615-620, München, DE; F.
COTTA-RAMUSINO: "Fünfachsiges NC-Fräsen von
Wasserturbinenschaufeln"**

(73) Patentinhaber: **Messerschmitt- Bölkow- Blohm
Gesellschaft mit beschränkter Haftung, Robert-
Koch- Strasse, D-8012 Ottobrunn (DE)**

(72) Erfinder: **Eschenfelder, Peter, Finkenweg 24,
D-8264 Waldkraiburg (DE)**
Erfinder: **Quentin, Jörg, Dipl.- Ing., Kurt- Eisner-
Strasse 42, D-8000 München 83 (DE)**

EP 0 078 915 B1

## Beschreibung

Die Erfindung bezieht sich auf ein verwundenes Profil-Bauteil nach dem Oberbegriff des Patentanspruchs 1 und auf eine Vorrichtung zur Bearbeitung von Polygonzug-Flächen nach dem Oberbegriff des Patentanspruchs 2.

Bei Hubschrauber-Rotorblättern wird als Stützkern und zur Übertragung von Querkraft- und Torsionsschub-Beanspruchungen Schaumstoff verwendet. Wegen der konstanten Blatt-Tiefe über weite Bereiche des Rotorblattes - z. B. über den ganzen profilierten Bereich - und wegen des hier konstanten Blattaufbaus kann ein zylindrischer Schaumstoffkern verwendet werden, an den lediglich an der Blattspitze ein Profilkegel angesetzt werden muß, was die Fertigung erheblich erschwert, z. B. durch Kopier-Fräsen. Zumeist entfällt hier eine Trennfläche, weil das gesamte Rotorblatt, noch während das Laminat feucht bzw. nur angeliert ist, in eine Form eingelegt und dort als Ganzes ausgehärtet wird.

Es sind auch Rotorblätter bekannt (GB-A-578 485), die aus zwei an einer Trennfläche miteinander verklebten Rotorblatt-Hälften zusammengesetzt sind. Während die Trennfläche bei geraden, nicht-verwundenen Rotorblättern mit parallelen Flügelvorder- und -hinterkanten als Trennebene ausgebildet werden kann, muß sie bei verwundenen Flügelprofilen, insbesondere solchen mit einem asymmetrischen Profilquerschnitt, ebenfalls mitverwunden sein und wird in diesem Fall durch eine gekrümmte, den Profilquerschnitt in etwa halbierende Trennungslinie erzeugt, die unter Änderung ihrer Kurvenform translatorisch längs einer ebenfalls gekrümmten Linie in Spannweitenrichtung des Flügels verschoben und gleichzeitig verschwenkt wird. Die Herstellung einer auf diese Weise erzeugten Trennfläche ist fertigungstechnisch sehr aufwendig, insbesondere wenn es sich um einen Groß-Flügel für eine Windenergieanlage handelt, für den aus Gewichtsgründen und für eine geringere Schubbelastung die Bauweise mit Schaumkern bevorzugt wird. Hier entsteht sowohl für die Oberschale als auch für die Unterschale die Notwendigkeit der genauen Bearbeitung der entsprechend der relativ großen Flügel-Verwindung gekrümmten Trennfläche, um die beiden Schalen zu einem Blatt zu verkleben.

Bisher erfordert die Bearbeitung derartiger Trennflächen für verwundene Profil-Bauteile

-einen großen Steueraufwand,

-große Toleranzen durch Winkelfehler,

-einen hohen Einrichtungsaufwand,

-einen hohen Meßaufwand bei Fertigungskontrolle.

Es ist daher Aufgabe der Erfindung, bei einem verwundenen Profil-Bauteil nach dem Oberbegriff des Patentanspruchs 1 die Trennfläche so zu definieren, daß eine bedeutend leichtere Bearbeitung als bisher gesichert ist, und eine entsprechende Bearbeitungs-Vorrichtung zu schaffen.

Diese Aufgabe wird erfindungsgemäß durch die Merkmale der Ansprüche 1 bzw. 2 gelöst.

Vorteilhafte Ausgestaltungen der Erfindung sind in den Unteransprüchen 3 - 5 angegeben.

Mit der erfindungsgemäßen Vorrichtung werden insbesondere die folgenden Vorteile erzielt:

- für jede zu bearbeitende Trennfläche ist nur eine Leit-Einrichtung wie z. B. die Führungsleiste gemäß Anspruch 2 erforderlich)

- wegen kleiner Winkelfehler sind kleine Toleranzen möglich,

- bei den beiden Trennflächen treten nur kleine Passungsfehler auf, da lediglich zwei Leit-Einrichtungen aufeinander abgestimmt werden müssen,

- eine leichte Kontrolle ist durch Auswechseln des Werkzeugs gegen eine Meßeinrichtung möglich.

Anhand der Zeichnung wird die Erfindung beispielsweise näher erläutert. Es zeigen:

Fig. 1 schematisch einen Flügel in der Aufsicht und im Schnitt, bei dem die Trennfläche mittels einer abknickenden Polygonzuglinie erzeugt ist;

Fig. 2 ein Ausführungsbeispiel der erfindungsgemäßen Vorrichtung in Vorderansicht; und

Fig. 3 das Ausführungsbeispiel der Fig. 2 in ergänzter, perspektivischer Ansicht.

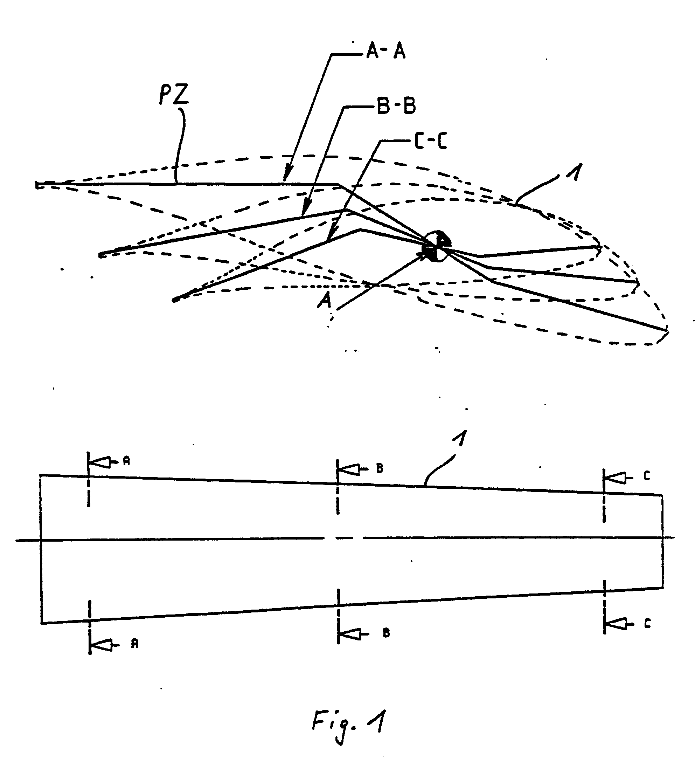

Aus Fig. 1 ist unmittelbar ersichtlich, wie die Trennfläche eines Flügels 1 mit einem unsymmetrischen Profilquerschnitt durch Verschwenken einer Polygonzuglinie PZ um eine ortsfeste Achse A bei gleichzeitiger Translation entlang der Achse A erzeugt wird.

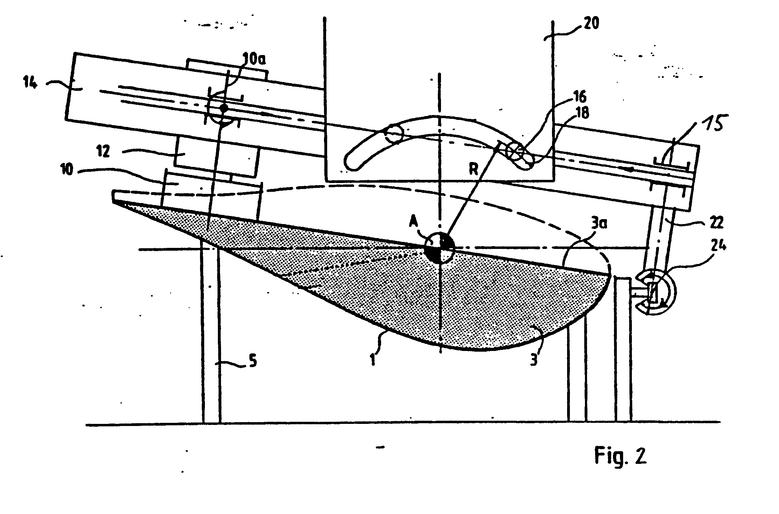

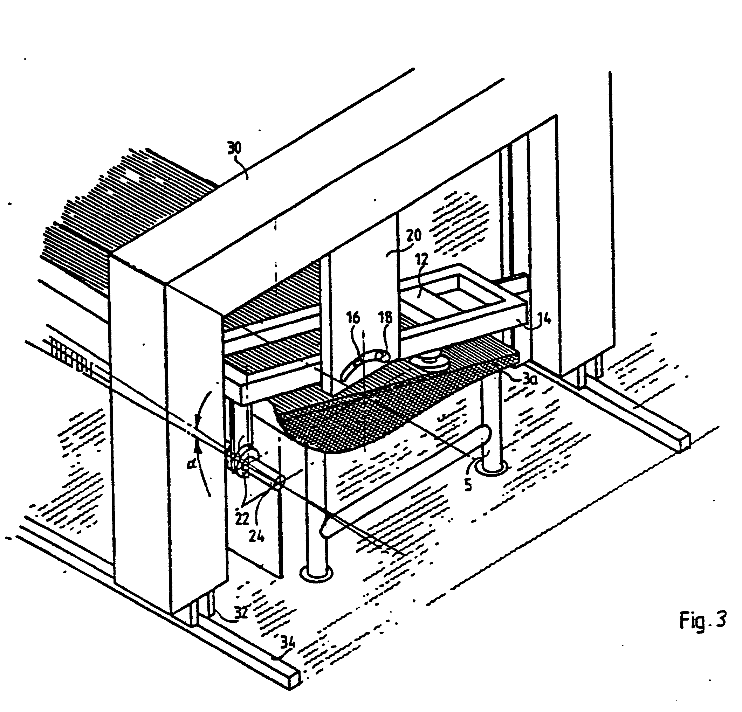

Eine Vorrichtung zur Bearbeitung einer derartigen Trennfläche ist in Fig. 2 und 3 abgebildet.

Der Flügel 1 mit einem Schaumkern 3 seiner Unterschale besitzt eine als Trennfläche gemäß Fig. 1 zu bearbeitende Schaumkern-Fläche 3a.

Der Flügel 1 ist auf Stützen 5 gelagert.

Ein zum Abrichten der Schaumkern-Fläche 3a nach einer abknickenden Polygonzuglinie dienendes Werkzeug 10 ist von einem Schlitten 12 gehalten, der seinerseits an einem Werkzeugträger 14 verschwenkbar und in Längsrichtung verschiebbar ist (vergl. die beiden Pfeile).

Das Werkzeug 10, z. B. ein Fräser, rotiert um eine Achse 10a.

Der Werkzeugträger 14 besitzt etwa mittig Rollenbolzen 16, die in eine Kreisbogen- (R)-Schlitzführung 18 an einer Halterung 20 eingreifen, sowie ein Schubgelenk 15, über das ein Balken 22 am Träger 14 angelenkt ist, der in Eingriff mit einer Führungsleiste 24 steht, durch die bei einer Translationsbewegung der Halterung 20 mittels dem in Fig. 3 gezeigten Portal 30 auf einer Schienenanordnung 32, 34 der Werkzeugträger 14 mit dem Werkzeug 10 um die ortsfeste Achse A verschwenkbar ist.

Vergl. dazu auch den Neigungswinkel $\alpha$ der Führungsleiste 24 in Fig. 3, der den Trennflächen-Verwindungswinkel darstellt.

**Patentansprüche**

1. Verwundenes Profil-Bauteil, insbesondere Großflügel für Windenergieanlagen, Rotorblatt für Drehflügler,

mit zwei an einer Trennfläche aneinanderliegenden Hälften, wobei die Trennfläche erzeugt ist durch Verwinden (Verschwenken) einer Linie bei gleichzeitiger Translation der Linie in Profillängsrichtung,

dadurch gekennzeichnet, daß die Trennfläche durch Verschwenken und gleichzeitige Translation einer für unsymmetrische Profilquerschnitte abknickenden Polygonzuglinie (PZ) um eine bzw. längs einer ortsfesten Achse (A) erzeugt ist.

2. Vorrichtung zur Bearbeitung von Polygonzug-Flächen, insbesondere der Trennfläche verwundener Profil-Bauteile nach Anspruch 1,

mit einem Werkzeugträger (14) und einer relativ zum Werkstück (1, 3) verfahrbaren Halterung (20), an der der Werkzeugträger um eine ortsfeste Achse (A) schwenkbar gehalten ist,

dadurch gekennzeichnet, daß die Halterung (20) in Richtung der ortfesten Achse (A) translatorisch verfahrbar

und zur Schwenklagensteuerung des Werkzeugträgers (14) beim translatorischen Verfahren der Halterung eine den Werkzeugträger führende, schräg zur ortfesten Achse (A) geneigte, bezüglich des Werkstücks feststehende Führungsbahn (Führungsleiste 24) vorgesehen ist.

3. Vorrichtung nach Anspruch 2, dadurch gekennzeichnet, daß der Werkzeug-Träger (14) zwei Rollenbolzen (16) besitzt, die an der Halterung (20) in einer Kreisbogen (R)-Schlitz-Führung (18) mit der ortsfesten Achse (A) als Mittelpunkt geführt sind.

4. Vorrichtung nach Anspruch 2 oder 3,

dadurch gekennzeichnet, daß das Werkzeug (10) über einen Werkzeugschlitten (12) am verschwenkbaren Werkzeug-Träger (14) längsverfahrbar und schwenkbar gehalten ist.

5. Vorrichtung nach einem der Ansprüche 2 bis 4,

gekennzeichnet, durch ein in Richtung der ortsfesten Achse (A) translatorisch verfahrbares Portal (30), das die zu bearbeitende Polygonzug-Fläche (3a) überspannt und den Werkzeug-Träger (14) haltert.

**Claims**

1. Twisted structural member, more especially a large vane for wind energy installations, rotor blade for rotary-wing aircraft, with two halves juxtaposed at a dividing surface, in which respect the dividing surface is produced by twisting (swivelling) of a line with simultaneous translation of the line in the longitudinal direction of the member, characterised in that the dividing surface is produced by swivelling and simultaneous translation of a polygon-course line (PZ), kinking for unsymmetrical profile cross-sections, about or respectively along a fixed axis (A).

2. Device for the processing of polygon-course surfaces, more especially of the dividing surface of twisted structural members according to claim 1, comprising a tool carrier (14) and a holder (20) which is mobile relative to the workpiece (1, 3) and on which the tool carrier is held so as to be swingable about a fixed axis, characterised in that the holder (20) is translatorily mobile in the direction of the fixed axis (A) and a guideway 24, which guides the tool carrier and which is inclined obliquely to the fixed axis (A) and which is stationary with respect to the workpiece, is provided for the swivel-position control of the tool carrier (14) upon the translatory travel of the holder.

3. Device according to claim 2, characterised in that the tool carrier (14) possesses two roller pins (16) which are guided on the holder (20) in a circular-arc-R-slot (18) with the fixed axis (A) as a central point.

4. Device according to claim 2 or 3, characterised in that the tool (10) is held by way of a tool slide (12) on the swingable tool carrier (14) so as to be longitudinally mobile and swingable.

5. Device according to one of claims 2 to 4, characterised by a gantry (30) which is translatorily mobile in the direction of the fixed axis (A) and which spans the polygon-course surface (3a) that is to be worked and holds the tool carrier (14).

**Revendications**

1. Element profilé gauche, notamment grande pale pour des installations d'énergie éolienne, ou pale de rotor pour des aéronefs à voilure tournante, composé de deux moitiés appliquées l'une contre l'autre par une surface de jonction, la surface de jonction étant produite par pivotement d'une ligne avec translation simultanée de cette ligne dans le sens de la longueur du profil, caractérisé en ce que la surface de jonction est produite par pivotement autour d'un axe (A) fixe et translation simultanée le long de cet axe d'une ligne polygonale (PZ) brisée dans le cas de profils asymétriques.

2. Dispositif pour l'usinage de surfaces à tracé polygonal, notamment de la surface de jonction d'éléments profiles gauches selon la revendication 1, comportant un porte-outil (14) et un support (20) qui est mobile par rapport à la pièce à usiner (1, 3) et sur lequel le porte-outil est monté pivotant autour d'un axe (A) fixe, caractérise en ce que le support (20) est mobile en translation dans la direction de l'axe (A) fixe et que, pour la commande de la position de

pivotement du porte-outil (14) pendant le deplacement translatoire du support, il est prévu un chemin de guidage (barre de guidage 24) qui est fixe par rapport à la pièce à usiner, qui est incliné par rapport à l'axe (A) fixe et qui guide le porte-outil.

3. Dispositif selon la revendication 2, caractérisé en ce que le porte-outil (14) possède deux goujons-rouleaux (16) qui sont guidés sur le support dans un guidage (18) à fente en arc de cercle (R) ayant comme centre l'axe (A) fixe.

4. Dispositif selon la revendication 2 ou 3, caractérisé en ce que l'outil (10) est monté mobile en translation et en pivotement par un chariot d'outil (12) sur le porte-outil (14) pivotant.

5. Dispositif selon l'une quelconque des revendications 2 à 4, caractérisé par un portique (30) qui est mobile en translation dans la direction de l'axe (A) fixe, qui enjambe la surface (3a) à trace polygonal à usiner et qui supporte le porte-outil (14).

Fig. 1

Fig. 2

Fig. 3